# EUROPEAN PATENT SPECIFICATION

(11) **EP 3 149 624 B1**
(45) Date of publication and mention of the grant of the patent: **12.02.2020**
(21) Application number: 15744992.7
(22) Date of filing: 19.05.2015
(51) Int. Cl.: G06T 3/60, G06T 3/40, H04N 5/217, H04N 5/222

(54) **PHOTO-VIDEO-CAMERA WITH DYNAMIC ORIENTATION LOCK AND ASPECT RATIO.**
PHOTO-VIDEO-KAMERA MIT DYNAMISCHEN AUSRICHTIUNG-SPERRE UND BILDFORMAT.
APPAREIL PHOTO-VIDEO AVEC BLOCAGE D'ORIENTATION ET FORMAT D' IMAGE DYNAMIQUES .

(30) Priority: 27.05.2014 US 201462003281 P; 02.09.2014 US 201414475192
(43) Date of publication of application: 05.04.2017
(73) Proprietor: InterDigital CE Patent Holdings, 75017 Paris (FR)
(72) Inventor: VOSS, Neil D., Darien, Connecticut 06820 (US)
(74) Representative: Huchet, Anne
(86) International application number: PCT/US2015/031600
(87) International publication number: WO 2015/183636

(56) References cited:
- EP-A1- 1 500 045
- EP-A2- 0 738 075
- WO-A1-03/005702
- WO-A1-2015/038351
- US-A1- 2005 146 620
- US-A1- 2007 171 293
- US-A1- 2008 246 830
- US-A1- 2008 246 830
- US-A1- 2011 193 982
- US-A1- 2011 228 112
- US-A1- 2011 279 697
- US-A1- 2013 238 990
- MARK ROBINS AND HEATHER BEAN: "Orientation locked video in digital still photography", RESEARCH DISCLOSURE, MASON PUBLICATIONS, HAMPSHIRE, GB, vol. 498, no. 72, 1 October 2005 (2005-10-01), XP007135559, ISSN: 0374-4353
- Erik Ringaby: "Geometric Models for Rolling-shutter and Push-broom Sensors", , 1 January 2014 (2014-01-01), XP055271222, ISBN: 978-91-7-519255-0 Retrieved from the Internet: URL:http://users.isy.liu.se/cvl/ringaby/pa pers/ringaby_dissertation_papers.pdf [retrieved on 2016-05-09]

## Description

### BACKGROUND OF THE INVENTION

Portable electronic devices are becoming more ubiquitous. These devices, such as mobile phones, music players, cameras, tablets and the like often contain a combination of devices, thus rendering carrying multiple objects redundant. For example, current touch screen mobile phones, such as the Apple iPhone or Samsung Galaxy android phone contain video and still cameras, global positioning navigation system, internet browser, text and telephone, video and music player, and more. These devices are often enabled an multiple networks, such as wifi, wired, and cellular, such as 3G, to transmit and received data.

The quality of secondary features in portable electronics has been constantly improving. For example, early "camera phones" consisted of low resolution sensors with fixed focus lenses and no flash. Today, many mobile phones include full high definition video capabilities, editing and filtering tools, as well as high definition displays. With this improved capabilities, many users are using these devices as their primary photography devices. Hence, there is a demand for even more improved performance and professional grade embedded photography tools.

For example, many videos on mobile devices are recorded in a manner where the user may inadvertently rotate the mobile device, thereby tilting the video horizon the vertical orientation of the video for the viewer. In an extreme case, a user may start filming with the camera in a vertical orientation and change to a horizontal orientation. This would result in a video which starts out oriented properly, but ends up rotated 90 degrees when being displayed to a viewer. To correct this problem post processing is required, which is an undesirable option for a user wishing to directly share the video via a social network.

Additionally, recording a video with the mobile device in a vertical position often results in a video which is taller than it is wide. This end result is not optimal for consumption on most displays, such as television screens, which are typically wider than they are tall. In many cases users shoot video without specific attention to horizontal orientation, especially when filming a social activity, live event or other subject matter where the user is engaged in the experience that takes their focus off the device they are recording with. Further, most mobile phones are designed to be used in a vertical orientation. Thus, a user may start using the device in its intended orientation, only to realize later that video should be filmed in a horizontal orientation.

EP1500045 defines a camera reducing the effect of poor orientation by measuring angle of rotation of the image about a horizontal axis, outputting angle data and correcting the captured image data based on the angle data.

Thus, it is desirable to overcome these problems with current video cameras embedded in mobile electronic devices.

### SUMMARY OF THE INVENTION

The invention is as defined by the appended claims.

### DETAILED DESCRIPTION OF THE DRAWINGS

These and other aspects, features and advantages of the present disclosure will be described or become apparent from the following detailed description of the preferred embodiments, which is to be read in connection with the accompanying drawings.

In the drawings, wherein like reference numerals denote similar elements throughout the views:
FIG. 1 shows a block diagram of an exemplary embodiment of mobile electronic device;
FIG. 2 shows an exemplary mobile device display having an active display according to the present invention;
FIG. 3 shows an exemplary process for image stabilization and reframing in accordance with the present disclosure;
FIG. 4 shows an exemplary mobile device display having a capture initialization 400 according to the present disclosure ; and
FIG. 5 shows an exemplary process for initiating an image or video capture 500 in accordance with the present disclosure.
FIG. 6 shows and exemplary process for tracking rotation during video capture in accordance with the present disclosure;
FIG. 7 shows and exemplary process for tracking rotation during image capture in accordance with the present invention ; the other embodiments marked as "in accordance with the present disclosure" are not part of the invention but are useful examples to understand the invention; and
FIG. 8 shows and exemplary process for maintaining framing of a shot with rotations during video capture accordance with the present disclosure.

### DETAILED DESCRIPTION OF THE PREFERRED EMBODIMENT

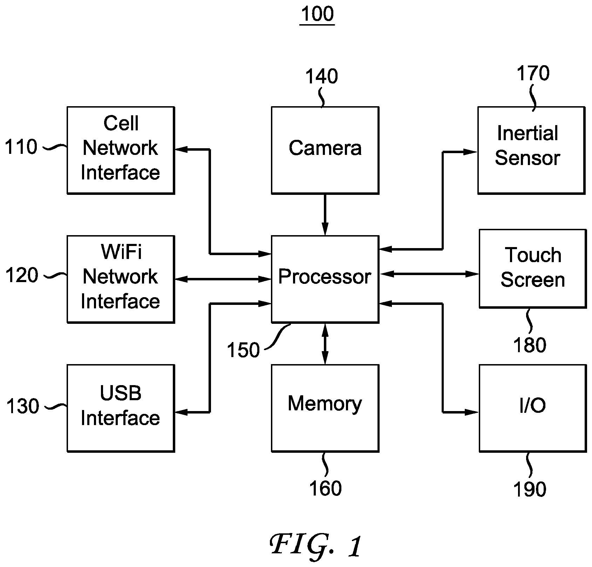

Referring to FIG. 1, a block diagram of an exemplary embodiment of mobile electronic device is shown. While the depicted mobile electronic device is a mobile phone 100, the invention may equally be implemented on any number of devices, such as music players, cameras, tablets, global positioning navigation systems etc. A mobile phone typically includes the ability to send and receive phone calls and text messages, interface with the Internet either through the cellular network or a local wireless network, take pictures and videos, play back audio and video content, and run applications such as word processing, programs, or video games. Many mobile phones include GPS and also include a touch screen panel as part of the user interface.

The mobile phone includes a main processor 150 that is coupled to each of the other major components. The main processor 150 may be a single processor or more than one processor as known by one skilled in the art. The main processor 150, or processors, routes the information between the various components, such as the network interfaces110, 120, camera 140, inertial sensor 170, touch screen 180, and other input/output I/O interfaces 190. The main processor 150 also processes audio and video content for play back either directly on the device or on an external device through the audio/video interface. The main processor 150 is operative to control the various sub devices, such as the camera 140, inertial sensor 170 touch screen 180, and the USB interface 130. The main processor 150 is further operative to execute subroutines in the mobile phone used to manipulate data similar to a computer. For example, the main processor may be used to manipulate image files after a photo has been taken by the camera function 140. These manipulations may include cropping, compression, color and brightness adjustment, and the like.

The cell network interface 110 is controlled by the main processor 150 and is used to receive and transmit information over a cellular wireless network. This information may be encoded in various formats, such as time division multiple access (TDMA), code division multiple access (CDMA) or Orthogonal frequency-division multiplexing (OFDM). Information is transmitted and received from the device trough the cell network interface 110. The interface may consist of multiple antennas encoders, demodulators and the like used to encode and decode information into the appropriate formats for transmission. The cell network interface 110 may be used to facilitate voice or text transmissions, or transmit and receive information from the internet. The information may include video, audio, and/or images.

The wireless network interface 120, or wifi network interface, is used to transmit and receive information over a wifi network. This information can be encoded in various formats according to different wifi standards, such as 802.11g, 802.11b, 802.11ac and the like. The interface may consist of multiple antennas encoders, demodulators and the like used to encode and decode information into the appropriate formats for transmission and decode information for demodulation. The wifi network interface 120 may be used to facilitate voice or text transmissions, or transmit and receive information from the internet. This information may include video, audio, and/or images.

The universal serial bus (USB) interface 130 is used to transmit and receive information over a wired link, typically to a computer or other USB enabled device. The USB interface 120 can be used to transmit and receive information, connect to the internet, transmit and receive voice and text calls, etc. Additionally, the wired link may be used to connect the USB enabled device to another network using the mobile devices cell network interace 110 or the wifi network interface 120. The USB interface 130 can be used by the main processor 150 to send and receive configuration information to a computer.

A memory 160, or storage device, may be coupled to the main processor 150. The memory 160 may be used for storing specific information related to operation of the mobile device and needed by the main processor 150. The memory 160 may be used for storing audio, video, photos, or other data stored and retrieved by a user.

The inertial sensor 170 may be a gyroscope, accelerometer, axis orientation sensor, light sensor or the like, which is used to determine a horizontal and/or vertical indication of the position of the mobile device.

The input output (I/O) interface 190, includes buttons, a speaker/microphone for use with phone calls, audio recording and playback, or voice activation control. The mobile device may include a touch screen 180 coupled to the main processor 150 through a touch screen controller. The touch screen 180 may be either a single touch or multi touch screen using one or more of a capacitive and resistive touch sensor. The smartphone may also include additional user controls such as but not limited to an on/off button, an activation button, volume controls, ringer controls, and a multi-button keypad or keyboard

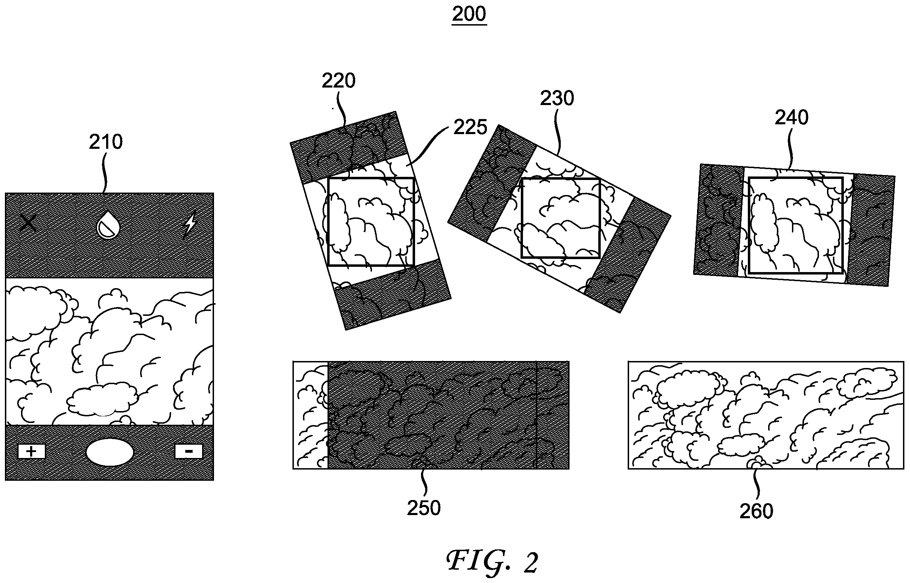

Turning now to FIG. 2, an exemplary mobile device display having an active display 200 according to the present invention is shown. The exemplary mobile device application is operative for allowing a user to record in any framing and freely rotate their device while shooting, visualizing the final output in an overlay on the device's viewfinder during shooting and ultimately correcting for their orientation in the final output.

According to the exemplary embodiment, when a user begins shooting the user's current orientation is taken into account and the vector of gravity based on the device's sensors is used to register a horizon. For each possible orientation, such as portrait 210, where the device's screen and related optical sensor is taller than wide, or landscape 250, where the device's screen and related optical sensor is wider than tall, an optimal target aspect ratio is chosen. An inset rectangle 225 is inscribed within the overall sensor that is best-fit to the maximum boundaries of the sensor given the desired optimal aspect ratio for the given (current) orientation. The boundaries of the sensor are slightly padded in order to provide 'breathing room' for correction. The inset rectangle 225 is transformed to compensate for rotation 220, 230, 240 by essentially rotating in the inverse of the device's own rotation, which is sampled from the device's integrated gyroscope. The transformed inner rectangle 225 is inscribed optimally inside the maximum available bounds of the overall sensor minus the padding. Depending on the device's current most orientation, the dimensions of the transformed inner rectangle 225 are adjusted to interpolate between the two optimal aspect ratios, relative to the amount of rotation.

For example, if the optimal aspect ratio selected for portrait orientation was square (1:1) and the optimal aspect ratio selected for landscape orientation was wide (16:9), the inscribed rectangle would interpolate optimally between 1:1 and 16:9 as it is rotated from one orientation to another. The inscribed rectangle is sampled and then transformed to fit an optimal output dimension. For example, if the optimal output dimension is 4:3 and the sampled rectangle is 1:1, the sampled rectangle would either be aspect filled (fully filling the 1:1 area optically, cropping data as necessary) or aspect fit (fully fitting inside the 1:1 area optically, blacking out any unused area with 'letter boxing' or 'pillar boxing'. In the end the result is a fixed aspect asset where the content framing adjusts based on the dynamically provided aspect ratio during correction. So for example a 16:9 video comprised of 1:1 to 16:9 content would oscillate between being optically filled 260 (during 16:9 portions) and fit with pillar boxing 250 (during 1:1 portions).

Additional refinements whereby the total aggregate of all movement is considered and weighed into the selection of optimal output aspect ratio are in place. For example, if a user records a video that is 'mostly landscape' with a minority of portrait content, the output format will be a landscape aspect ratio (pillar boxing the portrait segments). If a user records a video that is mostly portrait the opposite applies (the video will be portrait and fill the output optically, cropping any landscape content that falls outside the bounds of the output rectangle).

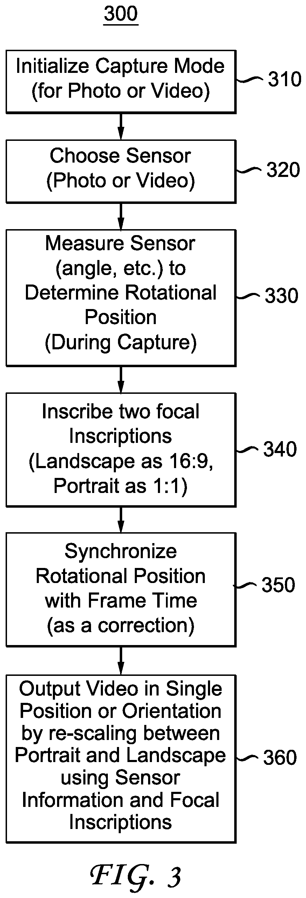

Referring now to FIG. 3, an exemplary process for image stabilization and reframing 300 in accordance with the present disclosure is shown. The system is initialized in response to the capture mode of the camera being initiated 310. The initialization may be initiated according to a hardware or software button, or in response to another control signal generated in response to a user action. Once the capture mode of the device is initiated, the mobile device sensor 320 is chosen in response to user selections. User selections may be made through a setting on the touch screen device, through a menu system, or in response to how the button is actuated. For example, a button that is pushed once may select a photo sensor, while a button that is held down continuously may indicate a video sensor. Additionally, holding a button for a predetermined time, such as 3 seconds, may indicate that a video has been selected and video recording on the mobile device will continue until the button is actuated a second time.

Once the appropriate capture sensor is selected, the system then requests a measurement from an inertial sensor 330. The inertial sensor may be a gyroscope, accelerometer, axis orientation sensor, light sensor or the like, which is used to determine a horizontal and/or vertical indication of the position of the mobile device. The measurement sensor may send periodic measurements to the controlling processor thereby continuously indicating the vertical and/or horizontal orientation of the mobile device. Thus, as the device is rotated, the controlling processor can continuously update the display and save the video or image in a way which has a continuous consistent horizon.

After the inertial sensor has returned an indication of the vertical and/or horizontal orientation of the mobile device, the mobile device depicts an inset rectangle on the display indicating the captured orientation of the video or image 340. As the mobile device is rotated, the system processor continuously synchronizes inset rectangle with the rotational measurement received from the inertial sensor 350. The representation of the orientation may be checked, further be refined, or improved by analyzing the image using techniques such as line recognition, facial recognition, or the like.

The user may optionally indicate a preferred final video or image ration, such as 1:1, 9:16, 16:9, or any other ratio selcted by the user. The system may also store user selections for different ratios according to orientation of the mobile device. For example, the user may indicate a 1:1 ratio for video recorded in the vertical orientation, but a 16:9 ratio for video recorded in the horizontal orientation. In this instance, the system may continuously or incrementally rescale video 360 as the mobile device is rotated. Thus a video may start out with a 1:1 orientation, but could gradually be rescaled to end in a 16:9 orientation in response to a user rotating from a vertical to horizontal orientation while filming. Optionally, a user may indicate that the beginning or ending orientation determines the final ratio of the video.

In certain other embodiments, the framing of the image inside the output box is maintained regardless of the aspect ratio. Thus, no matter how the device is oriented, scene is zoomed in or out to keep consistent framing. In some such cases, the object of interest in the video would stay the same size regardless of orientation and aspect ratio. In other cases, where maximum resolution is desired, the zooming in and out may change the size of the object of interest. Alternately, the image may be cropped to maintain the size regardless of orientation and aspect ratio.

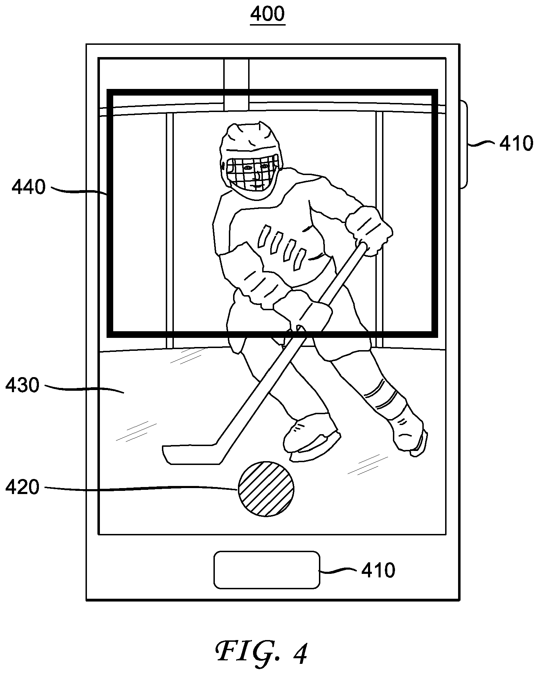

Turning now to FIG. 4, an exemplary mobile device display having a capture initialization 400 is shown. An exemplary mobile device is show depicting a touch tone display for capturing images or video. According to an aspect of the present invention, the capture mode of the exemplary device may be initiated in response to a number of actions. Any of hardware buttons 410 of the mobile device may be depressed to initiate the capture sequence. Alternatively, a software button 420 may be activated through the touch screen to initiate the capture sequence. The software button 420 may be overlaid on the image 430 displayed on the touch screen. The image 430 acts as a viewfinder indicating the current image being captured by the image sensor. An inscribed rectangle 440, as described previously, may also be overlaid on the image to indicate an aspect ratio of the image or video to be captured.

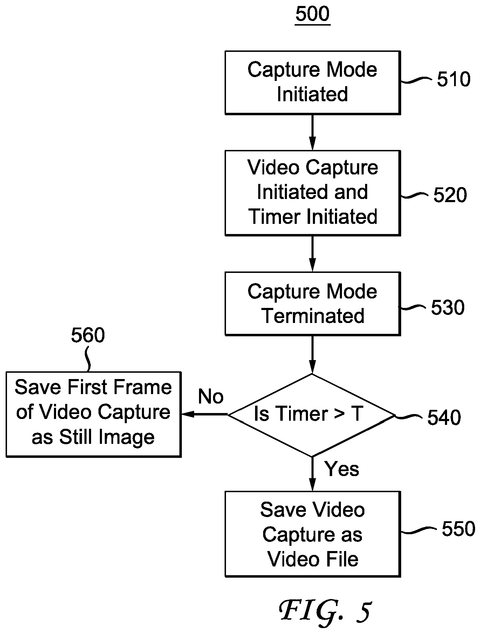

Referring now to FIG. 5, an exemplary process for initiating an image or video capture 500 in accordance with the present disclosure is shown. Once the imaging software has been initiated, the system waits for an indication to initiate image capture. Once the image capture indication has been received by the main processor 510, the device begins to save the data sent from the image sensor 520. In addition, the system initiates a timer. The system then continues to capture data from the image sensor as video data. In response to a second indication from the capture indication, indicating that capture has been ceased 530, the system stops saving data from the image sensor and stops the timer.

The system then compares the timer value to a predetermined time threshold 540. The predetermined time threshold may be a default value determined by the software provider, such as 1 second for example, or it may be a configurable setting determined by a user. If the timer value is less than the predetermined threshold 540, the system determines that a still image was desired and saves 560 the first frame of the video capture as a still image in a still image format, such as jpeg or the like. The system may optionally chose another frame as the still image. If the timer value is greater than the predetermined threshold 540, the system determines that a video capture was desired. The system then saves 550 the capture data as a video file in a video file format, such as mpeg or the like. The system may then return to the initialization mode, waiting for the capture mode to be initiated again. If the mobile device is equipped with different sensors for still image capture and video capture, the system may optionally save a still image from the still image sensor and start saving capture data from the video image sensor. When the timer value is compared to the predetermined time threshold, the desired data is saved, while the unwanted data is not saved. For example, if the timer value exceeds the threshold time value, the video data is saved and the image data is discarded.

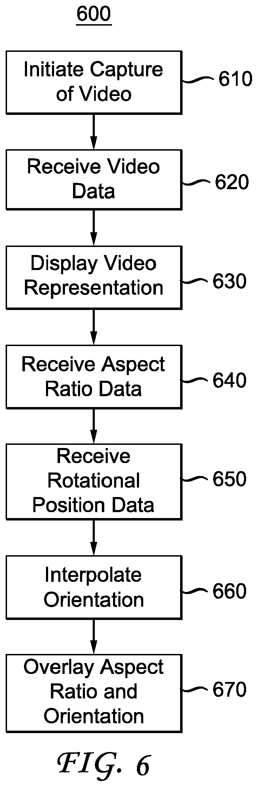

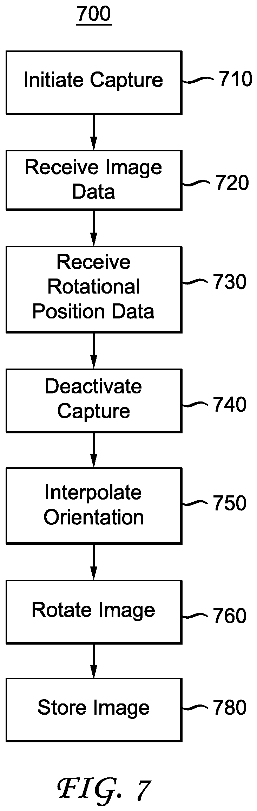

One potential issue that may be encountered is that the measurements from the inertial sensor and the times stamps of the video or still image may not be ideally synchronized. For example, the period for updated positional or rotational measurements and/or data may be too infrequent for the capture of video or images resulting in an inaccurate orientation for the video or image. This can result in choppy looking video. To address this positional or rotational data can be interpolated to determine an intermediate orientation. An example of this can be seen in FIGs. 6 and 7.

FIG. 6 depicts a flow diagram 600 of an exemplary methodology for processing a video stream wherein rotation occurs during capture. At the most basic level, the methodology involves seven steps. The first step is initiating capture of a video stream (step 610). The next step is receiving data representing a video stream (step 620). A representation of the video stream can then be displayed (step 630). The fourth step is receiving data representing an aspect ratio (step 640). The fifth step is receiving data representing rotational position (step 650). The orientation can then be interpolated using the data representing rotational position (step 660) The last step of the basic method is overlaying a graphic representative of said aspect ratio and said orientation over said representation of said video stream (step 670).

FIG. 7 depicts a flow diagram 700 of an exemplary methodology for processing a still image wherein rotation occurs during capture. At the most basic level, the methodology involves seven steps. The first step is initializing a capture mode (step 710). The next step is receiving data representing an image (step 720). During capture data representing rotational position is received (step 730). The capture is then deactivated (step 740). The orientation can then be interpolated using the data representing rotational position (step 750). Once orientation is interpolated, the image can be rotated accordingly (step 760) The last step of the basic method is saving the rotated image (step 770).

In some embodiments positional or rotational measurements can be obtained at the beginning and end of capture and the intermediate orientation can be interpolated. Such interpolation can further include the time stamp information of the video to more accurately orientate the video in accordance with time. Other techniques such as running average velocity can also be used to refine the interpolation. Other estimation techniques can also be used. In other embodiments, the frequency of rotational measurements may be increased during video capture to provide more accurate positional information in time with the video.

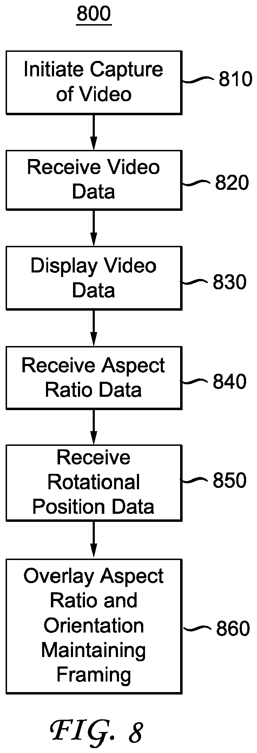

In certain other embodiments, the framing of the image inside the output box is maintained regardless of the aspect ratio. Thus, no matter how the device is oriented, scene is zoomed in or out to keep consistent framing. An example of this can be seen in FIG. 8.

FIG. 8 depicts a flow diagram 800 of an exemplary methodology for processing a video stream wherein rotation occurs during capture. At the most basic level, the methodology involves six steps. The first step is initiating capture of a video stream (step 610). The next step is receiving data representing a video stream (step 820). A representation of the video stream can then be displayed (step 830). The fourth step is receiving data representing an aspect ratio (step 840). The fifth step is receiving data representing rotational position (step 850). The last step of the basic method is overlaying a graphic representative of said aspect ratio and said orientation over said representation of said video stream wherein the framing of the original video is maintained in the overly (step 860).

In some embodiments, the object of interest or subject in the video would stay the same size regardless of orientation and aspect ratio. In other embodiments, where maximum resolution is desired, the zooming in and out may change the size of the object of interest. Alternately, the image may be cropped to maintain the size regardless of orientation and aspect ratio.

It should be understood that the elements shown and discussed above, may be implemented in various forms of hardware, software or combinations thereof. Preferably, these elements are implemented in a combination of hardware and software on one or more appropriately programmed general-purpose devices, which may include a processor, memory and input/output interfaces. The present description illustrates the principles of the present disclosure. It will thus be appreciated that those skilled in the art will be able to devise various arrangements that, although not explicitly described or shown herein, embody the principles of the disclosure within the scope of the appended claims.

All examples and conditional language recited herein are intended for informational purposes to aid the reader in understanding the principles of the disclosure and the concepts contributed by the inventor to furthering the art, and are to be construed as being without limitation to such specifically recited examples and conditions. Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure. Thus, for example, it will be appreciated by those skilled in the art that the block diagrams presented herewith represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

## Claims

1. A method comprising the steps of:
initializing a capture mode (710);
receiving (720) data representing an image and associating a time stamp with said image time of capture;
receiving (730) data representing rotational position sampled by an inertial sensor;
deactivating (740) said capture mode;
**characterized in that** it further comprises the steps of:
interpolating (750) an orientation of the image based on said time stamp and rotational position data;
determining an average velocity of rotation and further adjusting said interpolation of the orientation as appropriate;
rotating (760) said image in response to said interpolated orientation to generate a rotated image; wherein aspect ratio of said image changes in response to said orientation; and
storing (780) said rotated image.

2. The method of claim 1, wherein said method processes video stream such that said capture mode captures a video stream and said image represents a video stream.

3. The method of claim 1 or 2, wherein it further comprises the step of displaying an indicator indicating said rotational position; wherein said indicator is overlaid over said image in a manner representative of said rotated image.

4. The method of claim 3, wherein said indicator is a graphic representative of an aspect ratio.

5. The method of claim 1, wherein the data representing rotational position is received from the beginning and end of the capture mode and the orientation of the image is interpolated from the data representing rotational position received at the beginning and end of the capture mode.

6. The method of claim 1, wherein the rotation of the image further comprises image analysis.

7. An apparatus comprising:
an image sensor that captures image data;
an inertial sensor that determines rotational values;
a memory that stores data; and
a processor configured to:
initialize a capture mode,
receive data representing an image and associate a time stamp with time of image capture,
receive data representing rotational position,
**characterized in that** the processor is further configured to
deactivate said capture mode;
interpolate an orientation of the image based on said time stamp and rotational position data,
determine an average velocity of rotation and further adjust said interpolation of the orientation as appropriate;
rotate said image in response to said interpolated orientation to generate a rotated image, wherein said aspect ratio changes in response to said orientation; and
store said rotated image.

8. The apparatus of claim 7, wherein said image sensor captures a video stream and said processor is configured to initiate capture of a video stream, receive data representing a video stream, provide a display of a representation of said video stream, receive data representing an aspect ratio.

9. The apparatus of claim 7 or 8, wherein the processor is further configured to display an indicator indicating said rotational position; wherein said indicator is overlaid over said image in a manner representative of said rotated image.

10. The apparatus of any of the claims 7 to 9, wherein the data representing rotational position is received from the beginning and end of the capture mode and the orientation of the image is interpolated from the data representing rotational position received at the beginning and end the capture mode.

11. The apparatus of claim 7, wherein the processor rotates the image using image analysis.

12. The apparatus of claim 9 further comprising a display for displaying said representation of said video stream and overlay.

13. The apparatus of claim 9 further comprising a display for displaying said image data.

14. A non-transitory computer-readable medium storing computer-executable instructions executable to perform the method of any of claims 1 to 6.

## Patentansprüche

1. Verfahren, das die folgenden Schritte umfasst:
Initialisieren einer Erfassungsbetriebsart (710);
Empfangen (720) von Daten, die ein Bild repräsentieren, und Zuordnen eines Zeitstempels zu dem Bilderfassungszeitpunkt;
Empfangen (730) von Daten, die eine durch einen Trägheitssensor abgetastete Drehstellung repräsentieren;
Deaktivieren (740) der Erfassungsbetriebsart;
**dadurch gekennzeichnet, dass** es ferner die folgenden Schritte umfasst:
Interpolieren (750) einer Orientierung des Bilds auf der Grundlage des Zeitstempels und der Drehstellungsdaten;
Bestimmen einer Durchschnittsgeschwindigkeit der Drehung und ferner Einstellen der Interpolation der Orientierung, soweit erforderlich;
Drehen (760) des Bilds als Reaktion auf die interpolierte Orientierung, um ein gedrehtes Bild zu erzeugen; wobei sich das Seitenverhältnis des Bilds als Reaktion auf die Orientierung ändert; und
Speichern (780) des gedrehten Bilds.

2. Verfahren nach Anspruch 1, wobei das Verfahren den Videostrom in der Weise verarbeitet, dass die Erfassungsbetriebsart einen Videostrom erfasst und dass das Bild einen Videostrom repräsentiert.

3. Verfahren nach Anspruch 1 oder 2, wobei es ferner den Schritt des Anzeigens eines Indikators, der die Drehstellung angibt, umfasst; wobei der Indikator dem Bild auf eine Weise, die das gedrehte Bild repräsentiert, überlagert wird.

4. Verfahren nach Anspruch 3, wobei der Indikator eine Grafik ist, die ein Seitenverhältnis repräsentiert.

5. Verfahren nach Anspruch 1, wobei die Daten, die die Drehstellung repräsentieren, von dem Anfang und von dem Ende der Erfassungsbetriebsart empfangen werden, und wobei die Orientierung des Bilds aus den zu Beginn und am Ende der Erfassungsbetriebsart empfangenen Daten, die die Drehstellung repräsentieren, interpoliert wird.

6. Verfahren nach Anspruch 1, wobei die Drehung des Bilds ferner eine Bildanalyse umfasst.

7. Vorrichtung, die umfasst:
einen Bildsensor, der Bilddaten erfasst;
einen Trägheitssensor, der Drehwerte bestimmt;
einen Speicher, der Daten speichert; und
einen Prozessor, der konfiguriert ist zum:
Initialisieren einer Erfassungsbetriebsart;
Empfangen von Daten, die ein Bild repräsentieren, und Zuordnen eines Zeitstempels zu dem Bilderfassungszeitpunkt;
Empfangen von Daten, die eine Drehstellung repräsentieren;
**dadurch gekennzeichnet, dass** der Prozessor ferner konfiguriert ist zum:
Deaktivieren der Erfassungsbetriebsart;
Interpolieren einer Orientierung des Bilds auf der Grundlage des Zeitstempels und der Drehstellungsdaten;
Bestimmen einer Durchschnittsgeschwindigkeit der Drehung und ferner Einstellen der Interpolation der Orientierung, soweit erforderlich;
Drehen des Bilds als Reaktion auf die interpolierte Orientierung, um ein gedrehtes Bild zu erzeugen; wobei sich das Seitenverhältnis als Reaktion auf die Orientierung ändert; und
Speichern des gedrehten Bilds.

8. Vorrichtung nach Anspruch 7, wobei der Bildsensor einen Videostrom erfasst und wobei der Prozessor dafür konfiguriert ist, das Erfassen eines Videostroms zu initiieren, Daten zu empfangen, die einen Videostrom repräsentieren, eine Anzeige einer Darstellung des Videostroms bereitzustellen, Daten zu empfangen, die ein Seitenverhältnis repräsentieren.

9. Vorrichtung nach Anspruch 7 oder 8, wobei der Prozessor ferner dafür konfiguriert ist, einen Indikator, der die Drehstellung angibt, anzuzeigen; wobei der Indikator dem Bild auf eine Weise, die das gedrehte Bild repräsentiert, überlagert wird.

10. Vorrichtung nach einem der Ansprüche 7 bis 9, wobei die Daten, die die Drehstellung repräsentieren, von dem Anfang und von dem Ende der Erfassungsbetriebsart empfangen werden, und wobei die Orientierung des Bilds aus den zu Beginn und am Ende der Erfassungsbetriebsart empfangenen Daten, die die Drehstellung repräsentieren, interpoliert wird.

11. Vorrichtung nach Anspruch 7, wobei der Prozessor das Bild unter Verwendung einer Bildanalyse dreht.

12. Vorrichtung nach Anspruch 9, die ferner eine Anzeige zum Anzeigen der Darstellung des Videostroms und der Überlagerung umfasst.

13. Vorrichtung nach Anspruch 9, die ferner eine Anzeige zum Anzeigen der Bilddaten umfasst.

14. Nichttransitorisches computerlesbares Medium, das durch einen Computer ausführbare Anweisungen speichert, die ausgeführt werden können, um das Verfahren nach einem der Ansprüche 1 bis 6 auszuführen.

## Revendications

1. Procédé comprenant les étapes consistant à :
initialiser un mode de capture (710) ;
recevoir (720) des données représentant une image et associer un horodatage à l'heure de capture de ladite image ;
recevoir (730) des données représentant la position rotationnelle échantillonnée par un capteur inertiel ;
désactiver (740) ledit mode de capture ;
**caractérisé en ce qu'**il comprend en outre les étapes consistant à :
interpoler (750) une orientation de l'image en fonction dudit horodatage et desdites données de position rotationnelle ;
déterminer une vitesse moyenne de rotation et ajuster en outre ladite interpolation de l'orientation selon les besoins ;
faire pivoter (760) ladite image en réponse à ladite orientation interpolée pour générer une image pivotée ; où le rapport d'aspect de ladite image change en réponse à ladite orientation ; et
stocker (780) ladite image pivotée.

2. Procédé selon la revendication 1, dans lequel ledit procédé traite le flux vidéo de sorte que ledit mode de capture capture un flux vidéo et que ladite image représente un flux vidéo.

3. Procédé selon la revendication 1 ou 2, dans lequel il comporte en outre l'étape d'affichage d'un indicateur indiquant ladite position rotationnelle ; où ledit indicateur est superposé à ladite image d'une manière représentative de ladite image pivotée.

4. Procédé selon la revendication 3, dans lequel ledit indicateur est un graphique représentatif d'un rapport d'aspect.

5. Procédé selon la revendication 1, dans lequel les données représentant la position rotationnelle sont reçues du début et de la fin du mode de capture et l'orientation de l'image est interpolée à partir des données représentant la position rotationnelle reçue au début et à la fin du mode de capture.

6. Procédé selon la revendication 1, dans lequel la rotation de l'image comprend en outre l'analyse de l'image.

7. Appareil comprenant :
un capteur d'image qui capture les données d'image ;
un capteur inertiel qui détermine les valeurs rotationnelles ;
une mémoire qui stocke les données ; et
un processeur configuré pour :
initialiser un mode de capture,
recevoir des données représentant une image et associer un horodatage à l'heure de capture de ladite image ;
recevoir des données représentant une position rotationnelle, **caractérisé en ce que** le processeur est en outre configuré pour :
désactiver ledit mode de capture ;
interpoler une orientation de l'image en fonction dudit horodatage et desdites données de position rotationnelle,
déterminer une vitesse moyenne de rotation et ajuster en outre ladite interpolation de l'orientation selon les besoins ;
faire pivoter ladite image en réponse à l'orientation interpolée pour générer une image pivotée ; où ledit rapport d'aspect change en réponse à ladite orientation ; et
stocker ladite image pivotée.

8. Appareil selon la revendication 7, dans lequel ledit capteur d'image capture un flux vidéo et ledit processeur est configuré pour initier la capture d'un flux vidéo, recevoir des données représentant un flux vidéo, fournir l'affichage d'une représentation dudit flux vidéo, recevoir des données représentant un rapport d'aspect.

9. Appareil selon la revendication 7 ou 8, dans lequel le processeur est en outre configuré pour afficher un indicateur indiquant ladite position rotationnelle, où ledit indicateur est superposé à ladite image d'une manière représentative de ladite image pivotée.

10. Appareil selon l'une quelconque des revendications 7 à 9, dans lequel les données représentant la position rotationnelle sont reçues du début et de la fin du mode de capture et l'orientation de l'image est interpolée à partir des données représentant la position rotationnelle reçue au début et à la fin du mode de capture.

11. Appareil selon la revendication 7, dans lequel le processeur fait pivoter l'image à l'aide de l'analyse de l'image.

12. Appareil selon la revendication 9, comprenant en outre un écran pour afficher ladite représentation dudit flux vidéo et de ladite superposition.

13. Appareil selon la revendication 9, comprenant en outre un écran pour afficher lesdites données d'image.

14. Support non transitoire lisible sur ordinateur sur lequel sont stockées des instructions exécutables par un ordinateur pour mettre en œuvre le procédé selon l'une quelconque des revendications 1 à 6.
